# EUROPEAN PATENT APPLICATION

(11) **EP 4 093 083 A1**
(43) Date of publication of application: **23.11.2022**
(21) Application number: 21760206.9
(22) Date of filing: 24.02.2021
(51) Int. Cl.: H04W 24/08, H04W 76/15, H04W 88/06

(54) **METHOD AND APPARATUS FOR ADJUSTING DATA TRANSMISSION PATH**

(30) Priority: 25.02.2020 CN 202010115440
(71) Applicant: HUAWEI TECHNOLOGIES CO., LTD., Shenzhen, Guangdong 518129 (CN)
(72) Inventor: LI, Yong, Shenzhen, Guangdong 518129 (CN); LIAN, Hai, Shenzhen, Guangdong 518129 (CN); ZHAO, Xusheng, Shenzhen, Guangdong 518129 (CN)
(74) Representative: Pfenning, Meinig & Partner mbB
(86) International application number: PCT/CN2021/077671
(87) International publication number: WO 2021/169998

(57) **Abstract**

This application provides a method and an apparatus for adjusting a data transmission path. The method is applied to a terminal device, a first link is established between the terminal device and an NR base station, the terminal device transmits data of a first application to the NR base station through the first link, and a second link is established between the terminal device and an LTE base station. The method includes: The terminal device detects a delay of the data of the first application; and when the terminal device determines that the delay is greater than or equal to a first preset delay threshold, the terminal device sends first indication information to the NR base station, where the first indication information is used to indicate the NR base station to disconnect the first link from the terminal device; and the terminal device receives the data of the first application from the LTE base station through the second link, or the terminal device sends the data of the first application to the LTE base station through the second link. Embodiments of this application help reduce a delay during data transmission, and improves user experience.

## Description

This application claims priority to Chinese Patent Application No. 202010115440.7, filed with the China National Intellectual Property Administration on February 25, 2020 and entitled "METHOD AND APPARATUS FOR ADJUSTING DATA TRANSMISSION PATH", which is incorporated herein by reference in its entirety.

### TECHNICAL FIELD

This application relates to the communications field, and more specifically, to a method and apparatus for adjusting a data transmission path.

### BACKGROUND

In a network deployed in a networking mode of long term evolution (long term evolution, LTE) and new radio (new radio, NR) dual connectivity (or LTE-NR dual connectivity (EUTRAN-NR dual connectivity, EN-DC)), when a primary path is a link between a terminal device and an NR base station, if an amount of data cached by the terminal device does not reach a distributing threshold, uplink data or downlink data is usually transmitted through the link between the terminal device and the NR base station.

When signal quality of a cell served by the NR base station is poor, because the data amount cannot reach the distributing threshold, the uplink data and downlink data are still transmitted through the link between the terminal device and the NR base station. In this case, a large delay occurs in sending and receiving, and a user may sense network stalling and have poor user experience.

### SUMMARY

This application provides a method and an apparatus for adjusting a data transmission path, to help reduce a delay during data transmission, and improve user experience.

According to a first aspect, a method for adjusting a data transmission path is provided. The method is applied to a terminal device, a first link is established between the terminal device and an NR base station, the terminal device transmits data of a first application to the NR base station through the first link, and a second link is established between the terminal device and an LTE base station. The method includes: The terminal device detects a delay of the data of the first application; and when the terminal device determines that the delay is greater than or equal to a first preset delay threshold, the terminal device sends first indication information to the NR base station, where the first indication information is used to indicate the NR base station to disconnect the first link from the terminal device; and the terminal device receives the data of the first application from the LTE base station through the second link, or the terminal device sends the data of the first application to the LTE base station through the second link.

In this embodiment of this application, a terminal device in EN-DC dual connectivity may detect a data delay of an application. When a data delay is greater than a preset delay threshold and a data amount does not reach a distributing threshold, the terminal device may indicate the NR base station to disconnect a link between the terminal device and the NR base station, so that the data of the first application is transmitted through the second link between the terminal device and the LTE base station. This helps reduce a delay in transmitting the data of the first application in a timely manner, and improves user experience.

In some possible implementations, an amount of data that is of the first application and that is cached in the terminal device is less than or equal to a preset data amount threshold, and/or a quantity of data packets that are of the first application and that are cached in the terminal device is less than or equal to a preset quantity threshold of data packets.

In some possible implementations, the link between the terminal device and the NR base station is a primary path.

In some possible implementations, the terminal device may further disconnect the first link based on a type of data that needs to be sent by the terminal device. For example, the terminal device may identify a specific data packet, and the specific data packet may be a time-sensitive data packet.

With reference to the first aspect, in some implementations of the first aspect, that the terminal device sends first indication information to the NR base station includes: The terminal device sends secondary cell group failure information SCG failure to the NR base station and suppresses reporting of a B1 or B2 event.

In this embodiment of this application, the terminal device may send the SCG failure to the NR base station, so that the NR base station releases an NR cell, and the link between the terminal device and the NR base station is disconnected. This helps transmit the data of the first application through the link between the terminal device and the LTE base station in a timely manner, helps reduce the delay of the data of the first application, and improves user experience.

With reference to the first aspect, in some implementations of the first aspect, before the terminal device suppresses the reporting of the B1 or B2 event, the method further includes: The terminal device receives a measurement gap sent by the NR base station, where the measurement gap is used by the terminal device to measure a neighboring cell; and the terminal device ignores the measurement gap.

In this embodiment of this application, after sending the SCG failure to the NR base station, the terminal device may continue to obtain the measurement gap sent by the NR base station. The terminal device may not measure a neighboring cell based on the measurement gap, and therefore does not report the B1 or B2 event to the NR base station. In this way, the data of the first application can continue to be transmitted through the link between the terminal device and the LTE base station in a timely manner. This helps reduce the delay of the data of the first application, and improves user experience. In addition, the terminal device does not measure the neighboring cell, and this helps reduce power consumption of the terminal device.

With reference to the first aspect, in some implementations of the first aspect, before the terminal device suppresses the reporting of the B1 or B2 event, the method further includes: The terminal device receives a measurement gap sent by the NR base station, where the measurement gap is used by the terminal device to measure a neighboring cell; the terminal device determines a measurement result based on the measurement gap; and the terminal device determines that the measurement result meets reporting of the B1 or B2 event.

In this embodiment of this application, after obtaining the measurement gap sent by the NR base station, the terminal device may also perform measurement based on the measurement gap. Although the measurement result meets reporting of the B1 or B2 event, the terminal device still suppresses reporting of the B1 or B2 event. In this way, the data of the first application can continue to be transmitted through the link between the terminal device and the LTE base station in a timely manner. This helps reduce the delay of the data of the first application, and improves user experience.

With reference to the first aspect, in some implementations of the first aspect, that the terminal device sends first indication information to the NR base station includes: The terminal device sends tracking area update TAU information to the NR base station, where the TAU information includes capability information of the terminal device, and the capability information of the terminal device is used to indicate that the terminal device does not support LTE-NR dual connectivity.

In this embodiment of this application, the terminal device may send, to the NR base station, the capability information that indicates that the terminal device does not support the LTE-NR dual connectivity, so that the NR base station releases the NR cell, and the link between the terminal device and the NR base station is disconnected. This helps transmit the data of the first application through the link between the terminal device and the LTE base station in a timely manner, helps reduce the delay of the data of the first application, and improves user experience.

With reference to the first aspect, in some implementations of the first aspect, before the terminal device sends the first indication information to the NR base station, the method further includes: The terminal device sends attach attach information or detach detach information to the NR base station; and the terminal device receives a capability query request from the NR base station. That the terminal device sends first indication information to the NR base station includes: The terminal device sends capability information of the terminal device to the NR base station based on the capability query request, where the capability information of the terminal device is used to indicate that the terminal device does not support the LTE-NR dual connectivity.

In this embodiment of this application, the terminal device may trigger, by using the attach information or the detach information, the terminal device to send, to the NR base station, the capability information that indicates that the terminal device does not support the LTE-NR dual connectivity, so that the NR base station releases the NR cell, and the link between the terminal device and the NR base station is disconnected. This helps transmit the data of the first application through the link between the terminal device and the LTE base station in a timely manner, helps reduce the delay of the data of the first application, and improves user experience.

With reference to the first aspect, in some implementations of the first aspect, before the terminal device sends the first indication information to the NR base station, the method further includes: The terminal device determines that a signal strength of a cell served by the NR base station is less than or equal to a first preset signal strength threshold or signal quality of the cell served by the NR base station is less than or equal to a second preset signal quality threshold; and/or the terminal device determines that a signal strength of a cell served by the LTE base station is greater than or equal to a third signal strength threshold or signal quality of the cell served by the LTE base station is greater than or equal to a fourth signal quality threshold.

In this embodiment of this application, after determining that the delay of the data of the first application is greater than or equal to the preset delay threshold, the terminal device may further continue to determine signal strength or signal quality of the LTE cell and/or signal strength or signal quality of the NR cell. When the signal strength or signal quality of the NR cell is poor, and/or the signal quality or signal strength of the LTE cell is good, the terminal device may send the first indication information to the NR base station, so that the link between the terminal device and the NR base station is disconnected. This helps transmit the data of the first application through the link between the terminal device and the LTE base station in a timely manner, helps reduce the delay of the data of the first application, and improves user experience.

With reference to the first aspect, in some implementations of the first aspect, the method further includes: The terminal device detects a delay in transmitting the data of the first application through the second link; when the terminal device determines that the delay in transmitting the data of the first application is greater than or equal to the first preset delay threshold, the terminal device sends second indication information to the LTE base station, where the second indication information is used to indicate the LTE base station to disconnect the second link from the terminal device; the terminal device re-establishes the first link with the NR base station; and the terminal device receives the data of the first application from the NR base station through the first link, or the terminal device sends the data of the first application to the NR base station through the first link.

In this embodiment of this application, when the delay in transmitting data by the terminal device through the second link is greater than or equal to a second preset delay threshold, the terminal device may send the second indication information to the LTE base station, so that the LTE base station disconnects the link from the NR base station. After the link between the terminal device and the NR base station is established, the data of the first application may continue to be transmitted through the link between the terminal device and the NR base station. This helps reduce the delay of the data of the first application, and improves user experience.

In some possible implementations, the terminal device may send TAU information to the NR base station, where the TAU information includes capability information of the terminal device, and the capability information of the terminal device is used to indicate that the terminal device supports the LTE-NR dual connectivity. In this way, the link is re-established between the terminal device and the NR base station.

In some possible implementations, the terminal device sends the attach attach information or the detach detach information to the NR base station; and the terminal device receives the capability query request from the NR base station. That the terminal device sends first indication information to the NR base station includes: The terminal device sends the capability information of the terminal device to the NR base station based on the capability query request, where the capability information of the terminal device is used to indicate that the terminal device supports the LTE-NR dual connectivity. In this way, the link is re-established between the terminal device and the NR base station.

With reference to the first aspect, in some implementations of the first aspect, the terminal device further transmits data of a second application through the first link, and the method further includes: The terminal device detects a delay of the data of the second application; and when the terminal device determines that the delay is greater than or equal to a second preset delay threshold, the terminal device continues transmitting the data of the second application through the first link.

In this embodiment of this application, there may be a plurality of applications inside the terminal device, and the terminal device may choose to detect delays of data of at least some of the plurality of applications. For some applications that are insensitive to a data delay, when a data delay of the applications is greater than or equal to a preset threshold, transmission may continue to be performed through the link between the terminal device and the NR base station. This prevents unnecessary link switchovers.

According to a second aspect, an apparatus for adjusting a data transmission path is provided. The apparatus includes modules configured to perform the method for adjusting a data transmission path in any one of the first aspect or the possible implementations of the first aspect.

According to a third aspect, an apparatus for adjusting a data transmission path is provided. The apparatus may be the terminal device in the foregoing method designs, or may be a chip disposed in the terminal device. The apparatus includes a processor, and the processor is coupled to a memory and may be configured to execute instructions in the memory, to implement the method performed by the terminal device in any one of the first aspect and the possible implementations of the first aspect. Optionally, the apparatus further includes the memory. Optionally, the apparatus further includes a communications interface, and the processor is coupled to the communications interface.

When the apparatus is the terminal device, the communications interface may be a transceiver or an input/output interface.

When the apparatus is the chip configured in the terminal device, the communications interface may be an input/output interface.

According to a fourth aspect, a program is provided. When the program is executed by a processor, the program is used to perform the methods provided in the first aspect.

According to a fifth aspect, a program product is provided. The program product includes program code. When the program code is run by a communications unit and a processing unit, or a transceiver and a processor of an apparatus (for example, a terminal device), the apparatus is enabled to perform the method according to any one of the first aspect and the possible implementations of the first aspect.

According to a sixth aspect, a computer-readable medium is provided. The computer-readable medium stores a program, and the program enables an apparatus (for example, a terminal device) to perform the method according to any one of the first aspect and the possible implementations of the first aspect.

According to a seventh aspect, a chip system is provided. The chip system includes at least one processor. When a program instruction is executed in the at least one processor, a function on a terminal device of the method according to any one of the first aspect is implemented.

### BRIEF DESCRIPTION OF DRAWINGS

FIG. 1 is a schematic diagram of an application scenario of a technical solution according to an embodiment of this application;
FIG. 2 is another schematic diagram of an application scenario of a technical solution according to an embodiment of this application;
FIG. 3 is still another schematic diagram of an application scenario of a technical solution according to an embodiment of this application;
FIG. 4 is yet another schematic diagram of an application scenario of a technical solution according to an embodiment of this application;
FIG. 5 is a protocol stack architecture of a terminal device or a network device according to an embodiment of this application;
FIG. 6 is a schematic flowchart of a method for adjusting a data transmission path according to an embodiment of this application;
FIG. 7 is a schematic diagram of an internal signaling interaction process of a terminal device according to an embodiment of this application;
FIG. 8 is another schematic flowchart of a method for adjusting a data transmission path according to an embodiment of this application;
FIG. 9 is still another schematic flowchart of a method for adjusting a data transmission path according to an embodiment of this application;
FIG. 10 is a schematic diagram of an application scenario according to an embodiment of this application;
FIG. 11 is a schematic block diagram of a data transmission apparatus according to an embodiment of this application;
FIG. 12 is a schematic diagram of a structure of a terminal device according to an embodiment of this application; and
FIG. 13 is a schematic block diagram of a communications system according to an embodiment of this application.

### DESCRIPTION OF EMBODIMENTS

The following describes technical solutions of this application with reference to accompanying drawings.

The technical solutions in embodiments of this application may be applied to various communications systems, for example, a long term evolution (long term evolution, LTE) system, an LTE frequency division duplex (frequency division duplex, FDD) system, an LTE time division duplex (time division duplex, TDD) system, a future 5th generation (5th generation, 5G) system or a new radio (new radio, NR) system, and the like.

A terminal device in embodiments of this application may also be referred to as user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a customer premise equipment (Customer Premise Equipment, CPE), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

A network device in embodiments of this application may be a device configured to communicate with the terminal device. The network device may be an evolved NodeB (evolved NodeB, eNB, or eNodeB) in an LTE system, or may be a wireless controller in a cloud radio access network (cloud radio access network, CRAN) scenario. Alternatively, the network device may be a relay station, an access point, a vehicle-mounted device, a wearable device, a network device in a future 5G network, a network device in a future evolved PLMN network, or the like. This is not limited in embodiments of this application.

The network device may alternatively be a 4G core network device or a 5G core network device.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, a word processing software, and an instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that is in the terminal device or the network device and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk drive, a floppy disk drive, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine readable media" may include but is not limited to a radio channel, and various other media that can store, contain and/or carry an instruction and/or data.

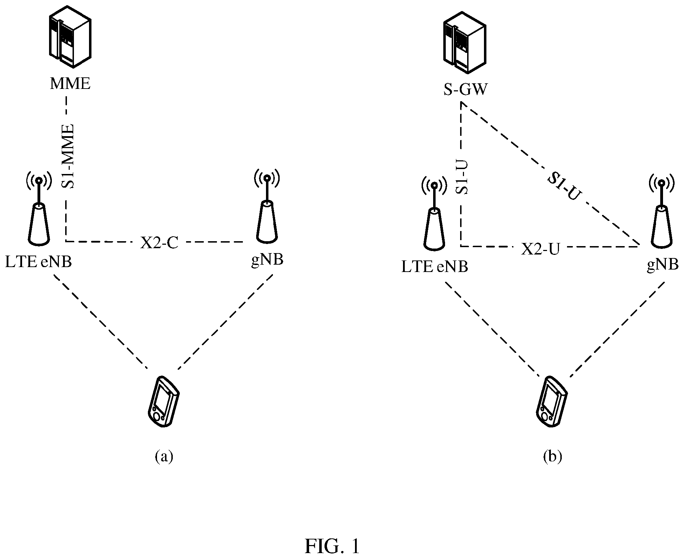

FIG. 1 to FIG. 4 are schematic diagrams of several networking modes to which the technical solutions in embodiments of this application are applicable.

FIG. 1 is a schematic diagram of a networking mode of LTE-NR dual connectivity (E-UTRA-NR dual connectivity, EN-DC). This networking mode is a dual connectivity mode in which an LTE base station (for example, an eNB) is a master node (master node), an NR base station (for example, a gNB) is a secondary node (secondary node), and the master-node base station is connected to a 4G core network (evolved packet core, EPC). Network architectures of a control plane connection and a user plane connection are respectively shown in (a) and (b) in FIG. 1. A mobility management entity (mobility management entity) is connected to the LTE base station over an S1 -MME interface, and a serving gateway (serving gateway, S-GW) is connected to the LTE base station over an S1-U interface. The S-GW may be further connected to the NR base station over the S1-U interface.

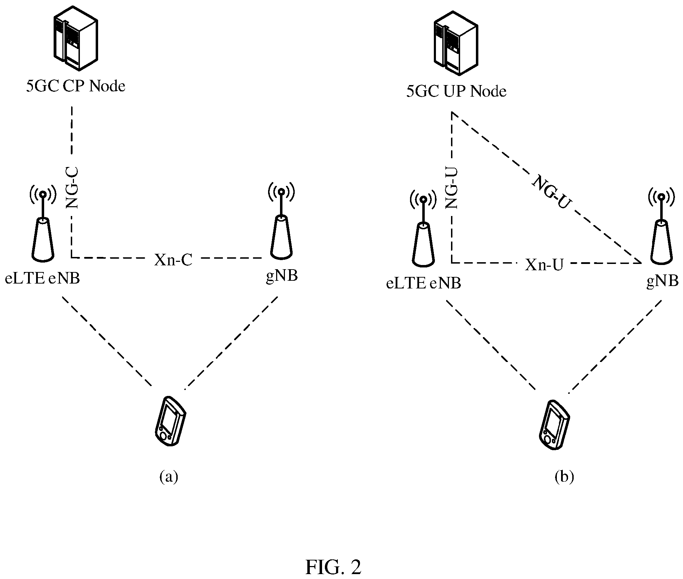

FIG. 2 is a schematic diagram of a networking mode of next-generation LTE-NR dual connectivity (NG E-UTRA-NR dual connectivity, NG EN-DC). This networking manner is a dual connectivity mode in which an evolved LTE base station (for example, an Ng-eNB) is used as a master node, an NR base station (for example, a gNB) is used as a secondary node, and the master-node base station is connected to a 5G core network in a manner of. Network architectures of a control plane connection and a user plane connection are respectively shown in (a) and (b) in FIG. 2. A 5GC CP node is connected to the evolved LTE base station over an NG-C interface, and a 5GC UP node is connected to the evolved LTE base station over an NG-U interface. The 5GC UP node may be further connected to the NR base station over the NG-U interface.

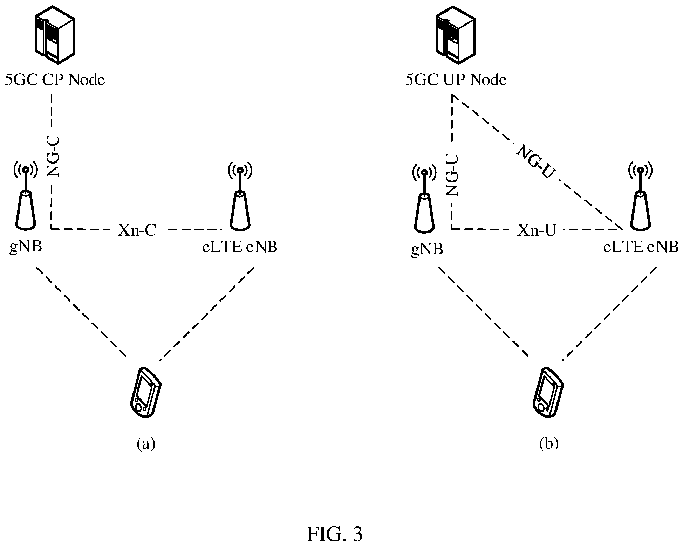

FIG. 3 is a schematic diagram of a networking mode of NR-LTE dual connectivity (NR-E-UTRA dual connectivity, NE-DC). This networking mode is a dual connectivity mode in which an NR base station (for example, a gNB) is used as a master node, an evolved LTE base station (for example, a Ng-eNB) is used as a secondary node, and the master-node base station is connected to a 5G core network. Network architectures of a control plane connection and a user plane connection are respectively shown in (a) and (b) in FIG. 3. A 5GC CP node is connected to the NR base station over an NG-C interface, and a 5GC UP node is connected to the NR base station over an NG-U interface. The 5GC UP node may be further connected to the evolved LTE base station over the NG-U interface.

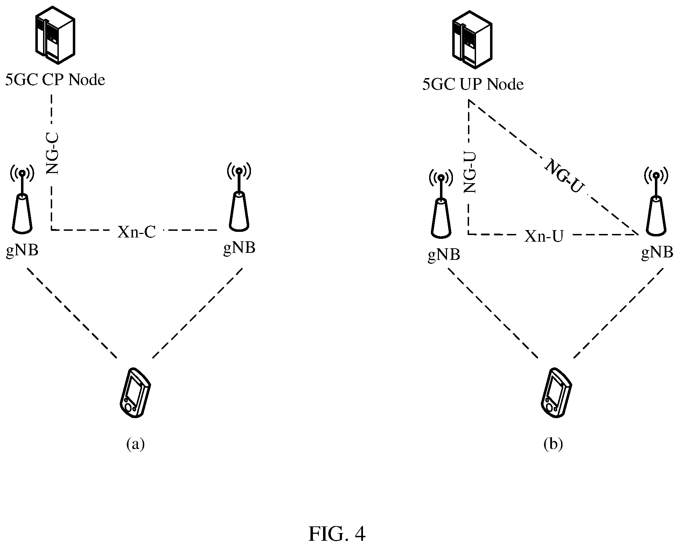

FIG. 4 is a schematic diagram of a networking mode of NR dual connectivity (NR-NR dual connectivity, NR-DC). This networking mode is a dual connectivity mode in which an NR base station is used as a master node, another NR base station is used as a secondary node, and the master-node base station is connected to a 5G core network. Network architectures of a control plane connection and a user plane connection are respectively shown in (a) and (b) in FIG. 4. A 5GC CP node is connected to the NR base station over an NG-C interface, and a 5GC UP node is connected to the NR base station over an NG-U interface.

A scenario to which this application is applied includes but is not limited to the following types: a network supporting 4G, for example, a network in which only an LTE cell is deployed; a network supporting 5G, for example, a network in which only an NR cell is deployed and that supports a system architecture of NR standalone (standard alone, SA) networking or NR DC networking; a network supporting both 4G and 5G, for example, a network in which both an LTE cell and an NR cell are deployed and that supports the foregoing system architecture of EN-DC networking, system architecture of NG EN-DC networking, or system architecture of NE-DC networking. In addition, a scenario to which this application is applied includes a network deployed in sub-6 GHz and a network deployed in above-6 GHz millimeter wave.

Currently, there are several typical configurations below for downlink data transmission in a commercial non-standalone (non-standalone, NSA) network, so that downlink data can be transmitted only on a link between a terminal device and an NR base station.
(1) Downlink data transmission is not distributed, which is the most common configuration.
(2) In a distributed scenario, a primary path is usually configured as the link between the NR base station (for example, a gNB) and the terminal device. A service with a small data amount usually does not reach a distribution threshold, so that downlink data is usually transmitted to the terminal device through the primary path.

It should be understood that, in embodiments of this application, a service with a small data amount not reaching a distribution threshold may mean that an amount of data that is of some applications and that is cached in the terminal device does not reach a preset data amount threshold, and/or a quantity of data packets that is of an application and that is cached in the terminal device does not reach a preset quantity threshold of data packets.

In a scenario related to embodiments of this application, the primary path is of the NR base station. For data of a specific application in the terminal device, the data may be transmitted only through the link between the terminal device and the NR base station.

In another scenario, the primary path is of the NR base station. For data of an application in the terminal device, a majority of the data may be transmitted through the link between the terminal device and the NR base station, and a remaining part of the data may be transmitted through a link between the terminal device and an LTE base station.

In embodiments of this application, the primary path may be a path with a high data transmission priority. For example, a path with a high transmission rate may be a primary path, or a path with a large amount of transmitted data may be a primary path.

It should be understood that in embodiments of this application, an example in which the primary path is the path between the NR base station and the terminal device is used for description. Certainly, the primary path may alternatively be of an LTE base station, and this is also applicable to embodiments of this application.

When a signal of a cell served by the NR base station (for example, a gNB) is poor, but a signal of a cell served by the LTE base station (for example, an eNB) is good, a problem of a large delay of data packets occurs when downlink data is sent and received over the NR base station, and a user may sense game freezing or the like, resulting in poor user experience. For example, in an NSA field test of a delay of a key application, a round trip time (round trip time, RTT) of some delay-sensitive applications (for example, Arena of Valor) increases by 200 ms to 300 ms. In this case, reference signal received power (reference signal receiving power, RSRP), reference signal received quality (reference signal receiving quality, RSRQ), or a signal to interference plus noise ratio (signal to interference plus noise ratio, SINR) of a cell served by the NR base station is poor, but RSRP, RSRQ, or an SINR of a cell served by the LTE base station is good.

On a commercial NSA network, downlink data transmission is usually configured not to be distributed and a primary path is of NR. When the following conditions are met, a service RTT increases significantly, resulting in poor user experience:
(1) The NR base station is successfully added in the EN-DC, NG EN-DC, or NE-DC.
(2) The RSRP, RSRQ, or SINR of the cell served by the NR base station is poor.
(3) The RSRP, RSRQ, or SINR of the cell served by the LTE base station is good.

In the foregoing scenario, according to an existing protocol, the terminal device keeps using the NR cell to receive or send data. Consequently, the RTT becomes large, resulting in poor user experience.

To resolve the foregoing problem, embodiments of this application provide a method for adjusting a data transmission path, to effectively resolve a problem of the large RTT in this scenario. The method for adjusting a data transmission path provided in embodiments of this application allows to gradually try a plurality of recovery policies, to reduce the RTT as soon as possible and improve user experience.

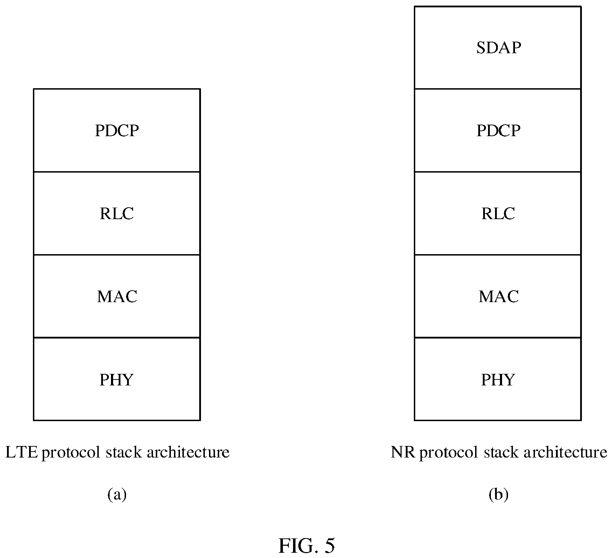

Before the method for adjusting a data transmission path in embodiments of this application is described, a processing method used when a terminal device or a network device performs data packet assembly in embodiments of this application is first described. FIG. 5 shows a protocol stack architecture of a terminal device or a network device according to an embodiment of this application.

As shown in (a) in FIG. 5, a user plane protocol stack architecture of a terminal device or a network device in LTE may be divided into functions of protocol layers such as a packet data convergence protocol (packet data convergence protocol, PDCP) layer, a radio link control (radio link control, RLC) layer, a media access control (media access control, MAC) layer, and a physical (PHY) layer. The terminal device may perform packet assembly at the PDCP layer and the RLC layer.

As shown in (b) in FIG. 5, a user plane protocol stack architecture of a terminal device or a network device in NR may be divided into functions of protocol layers such as a service data adaptation (service data adaptation protocol, SDAP) layer, a PDCP layer, an RLC layer, a MAC layer, and a physical layer. The terminal device may perform packet assembly at the RLC layer, and specifically, may perform packet assembly based on a size of a resource allocated in an uplink grant.

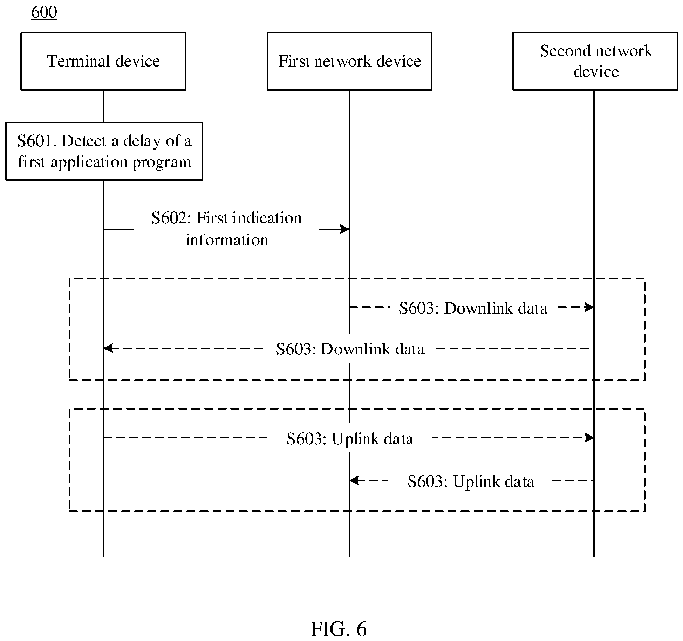

FIG. 6 is a schematic flowchart of a method 600 for adjusting a data transmission path according to an embodiment of this application. As shown in FIG. 6, the method 600 may be performed by a terminal device, a first network device, and a second network device. A link between the terminal device and the first network device is a first link, and a link between the terminal device and the second network device is a second link. The terminal device may transmit data of a first application program to the first network device through the first link. The method 600 includes the following steps.

S601. The terminal device detects a delay of the first application program.

For example, the first application program may be some application programs selected by a user from the terminal device, and the user may set an acceptable preset delay threshold for the application programs. Alternatively, the user may select some application programs, and the terminal device may set a preset delay threshold for the application programs.

Usually, the delay threshold may be a maximum acceptable delay when an application program runs. For example, when a game application program is running, obvious freezing usually occurs when a delay exceeds 160 ms. In this case, 160 ms may be set as a time threshold of the game application program. Because different applications have different delay requirements, different delays can be set for different applications.

When detecting the delay of the first application, the terminal device may first identify user identification (user identification, UID) of the application to determine a corresponding application program. An Android system is used as an example. One UID may include a plurality of applications, one application includes a plurality of processes, and each process is identified by using a process identifier (process ID, PID). The terminal device may identify a currently running application by using the UID or the PID.

The terminal device may store a list of applications that need to perform the method 600. These applications may be obtained through testing. For example, a plurality of applications may be tested, and data delay-sensitive applications may be stored in a list. Then, the terminal device may perform the method 600 and the following method for the applications in the list.

Alternatively, for some applications, only some data packets may be data delay-sensitive, and other data packets are not data delay-sensitive. In this case, the terminal device may alternatively perform the method 600 and the following method for these delay-sensitive data packets.

It should be understood that, in this embodiment of this application, the terminal device may transmit the data of the one or more application programs to the first network device through the first link. The terminal device may simultaneously detect delays of one or more application programs.

S602. When the terminal device determines that the delay of the first application program is greater than or equal to a preset delay threshold, the terminal device sends first indication information to the first network device, where the first indication information is used to indicate the first network device to disconnect the first link from the terminal device.

For example, the first network device is an NR base station, and the second network device is an LTE base station. In this case, when the terminal device determines that the delay of the first application program is greater than or equal to the preset delay threshold, the terminal device may send secondary cell group failure information (secondary cell group failure information, SCG failure) to the NR base station, to suppress NR measurement reporting. When receiving the SCG failure, the first network device may determine that a delay in receiving or sending data by the terminal device through the first link is large, and then the first network device may disconnect the first link from the terminal device.

The SCG failure in NR includes a failure type and a measurement result of a failure in a secondary cell group (secondary cell group, SCG), and the measurement result includes frequency information of a beam (a synchronization signal block (synchronization signal block, SSB) and a channel state information reference signal (channel state information RS, CSI-RS)) of the SCG failure, measurement results of a serving cell and a neighboring cell (including a physical cell identifier (physical cell identification, PCI), RSRP/RSRQ/an SINR of the SSB/CSI-RS, an index index of the SSB/CSI-RS in which the SCG failure is located, and corresponding RSRP/RSRQ/an corresponding SINR).

It should be understood that, in a scenario of EN-DC, NG EN-DC, or NE-DC, the NR base station disconnecting the link from the terminal device may also be understood as: The NR base station releases the EN-DC, the NG EN-DC, or the NE-DC.

In an embodiment, in addition to sending the first indication information to the first network device, the terminal device may further suppress reporting of a B1 or B2 event of an NR neighboring cell, where the suppression event is T1.

It should be understood that, in this embodiment of this application, the terminal device may send the SCG failure to the NR base station to enable a network to release EN-DC, and the terminal device suppresses reporting of the B1 or B2 event of the NR neighboring cell to prevent the network from adding EN-DC (or from adding an NR cell).

In this embodiment of this application, after the terminal device sends the SCG failure to the NR base station, if the terminal device does not suppress reporting of the B1 or B2 event, the network device may further continue to add an NR cell for the terminal device after obtaining the B1 or B2 event reported by the terminal device. When to add the NR cell is determined by the network device.

In an embodiment, after the terminal device sends the SCG failure to the NR base station, the network device may continue to send a measurement gap to the terminal device, so that the terminal device measures the neighboring cell. After obtaining the measurement gap sent by the network device, the terminal device may ignore the measurement gap (or the terminal device obtains the measurement gap but does not perform measurement). Therefore, the terminal device does not report the B1 or B2 event to the network device. In this way, the network device cannot add an NR cell for the terminal device.

In another embodiment, after the terminal device sends the SCG failure to the NR base station, the network device may continue to send the measurement gap to the terminal device, so that the terminal device measures the neighboring cell. The terminal device may measure the neighboring cell. If a measurement result meets the B1 or B2 event, the terminal device does not report the measurement result. In this case, the network device cannot add another NR cell for the terminal device. Alternatively, if the measurement result does not meet the B1 or B2 event, the terminal device does not report the B1 or B2 event, and the network device does not add another NR cell for the terminal device.

In an embodiment, in addition to the terminal device detecting that the delay of the first application program is greater than or equal to the preset delay threshold, trigger conditions for the terminal device to send the first indication information to the first network device may further include that the terminal device determines that one or more of the following conditions are met.
(1) RSRP of a cell of the second network device is greater than or equal to a first preset RSRP threshold.
(2) RSRQ of the cell of the second network device is greater than or equal to a first preset RSRQ threshold.
(3) An SINR of the cell of the second network device is greater than or equal to a first preset SINR threshold.
(4) Uplink and downlink rates.

In other words, when the terminal device determines that the delay of the data of the first application is greater than the preset delay threshold and cell signal strength of the second network device is good, the terminal device may send first indication information to the network device.

In an embodiment, in addition to the terminal device detecting that the delay of the first application program is greater than or equal to the preset delay threshold and the cell signal strength of the second network device is good, trigger conditions for the terminal device to send the first indication information to the first network device may further include that the terminal device determines that one or more of the following conditions are met.

(5) RSRP of a cell of the first network device is less than or equal to a second preset RSRP threshold.

(6) RSRQ of the cell of the first network device is less than or equal to a second preset RSRQ threshold.

(7) An SINR of the cell of the first network device is less than or equal to a second preset SINR threshold.

S603. Based on the first indication information, the first network device sends downlink data to the terminal device over the second network device, or receives uplink data from the terminal device over the second network device.

In the solution for adjusting a data transmission path in this embodiment of this application, when the terminal device determines that delays of some application programs are large, the terminal device may send the first indication information to the network device, so that the terminal device can transmit data to the network device through another link. This helps reduce a delay of an application program in a timely manner, and improves user experience.

It should be understood that the method 600 is applicable to the scenario of EN-DC, NG EN-DC, or NE-DC. The terminal device and the NR base station transmit data of some application programs. When a signal of a cell served by the NR base station is poor or a signal of a cell served by the LTE base station is good, the terminal device may report the SCG failure to trigger the network to delete the EN-DC, NG EN-DC, or NE-DC, so as to reduce delays of the application programs, and improve user experience. The foregoing method is also applicable to a scenario in which both the first network device and the second network device are NR base stations (for example, an NR-DC scenario shown in FIG. 4), or is applicable to a scenario in which both the first network device and the second network device are LTE base stations.

In this embodiment of this application, the terminal device may further disconnect the first link based on a type of data that needs to be sent by the terminal device, and may identify a specific data packet. The specific data packet may be a time-sensitive data packet. For example, the terminal device may first determine an identifier of the data packet. The terminal device may store information about types of some delay-sensitive data packets. If the terminal device determines that the transmitted data packet is the time-sensitive data packet, the terminal device may continue to determine a relationship between a delay of the data packet and the preset delay threshold. If the delay of the data packet is greater than or equal to the preset delay threshold, the terminal device may send the first indication information to the network device, so that the terminal device and the network device transmit the data packet through the second link.

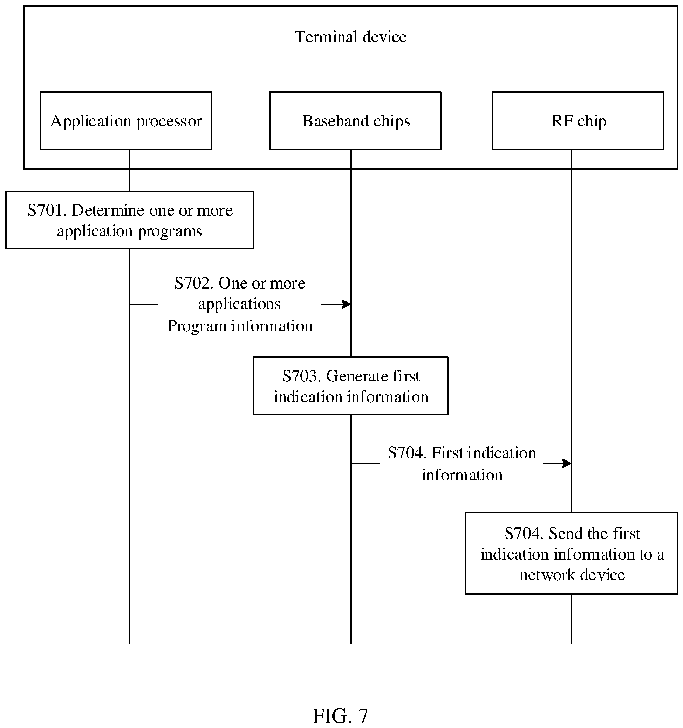

FIG. 7 shows a schematic diagram of an internal signaling interaction process of a terminal device according to an embodiment of this application. The terminal device may include an application processor (application processor, AP), a baseband chip, and a radio frequency chip. The signaling interaction process includes the following steps.

S701. The application processor determines one or more application programs.

In this embodiment of this application, the application processor may identify an application for which the method in this embodiment of this application needs to be performed. The application processor may determine, based on a UID of the application, whether to detect a delay of the application; or the application processor may determine, based on identification information on the data packet, an application to which the data packet belongs, and determine whether to detect a delay of the application.

For example, a user is playing a game on the terminal device, and the terminal device may determine, based on a UID of the game, whether to detect a delay of the application.

S702. The application processor sends information about the one or more applications to the baseband chip.

S703. When the baseband chip determines that a delay of a first application program is greater than or equal to a preset delay threshold, the baseband chip may generate first indication information, where the first indication information is used to indicate a first network device to disconnect a first link from the terminal device.

For example, the baseband chip may determine a relationship between the preset delay threshold and a delay in receiving data that is of the application and that is sent by the network device; or the baseband chip may determine a relationship between the preset delay threshold and a delay in sending the data of the application to the network device.

S704. The baseband chip sends the first indication information to the radio frequency chip, and the radio frequency chip sends the first indication information to the first network device.

The following uses a scenario of EN-DC as an example to describe a method for adjusting a data transmission path in embodiments of this application.

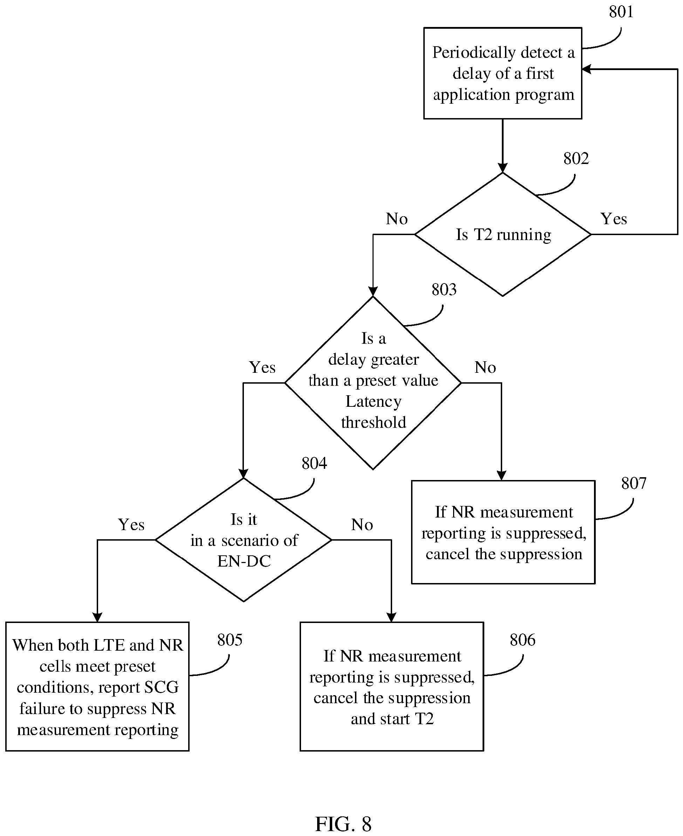

FIG. 8 is a schematic flowchart of a method 800 for adjusting a data transmission path according to an embodiment of this application. The method 800 may be performed by a terminal device, and the method 800 includes the following steps.

S801. The terminal device periodically detects a delay of a first application program.

S802. The terminal device determines whether a ping-pong handover suppression timer T2 is running, where when the ping-pong handover suppression timer T2 is running, the terminal device receives downlink data of the first application program over an NR base station, or the terminal device sends uplink data of the first application program to the NR base station.

It should be understood that, in this embodiment of this application, if the ping-pong handover suppression timer T2 is running, the terminal device transmits the data of the first application only through a link with the NR base station, and does not transmit the data of the first application through a link with an LTE base station.

If the ping-pong handover suppression timer T2 is running, the terminal device returns to S801 to continue to detect the delay of the first application program.

S803. If the ping-pong handover suppression timer T2 is not running, the terminal device determines whether the delay of the first application program is greater than or equal to a preset delay threshold.

S804. If the terminal device determines that the delay of the data of the first application program is greater than the preset delay threshold, the terminal device continues to determine whether the terminal device is currently in a scenario of EN-DC.

It should be understood that, in this embodiment of this application, if the terminal device is in the scenario of EN-DC, the terminal device may receive the data of the first application program from the NR base station.

S805. If the terminal device is currently in the scenario of EN-DC, the terminal device continues to detect signal strength of a cell served by the NR base station and signal strength of a cell served by the LTE base station. If the signal strength of the cell served by the NR base station is less than or equal to a first preset value and the signal strength of the cell served by the LTE base station is greater than or equal to a second preset threshold, the terminal device sends an SCG failure to the NR base station, to trigger a network to release EN-DC, and suppress reporting of a B1 or B2 event of an NR neighboring cell, where the suppression event is T1.

For example, when the terminal device determines that the delay of the first application program is greater than the preset delay threshold, one or more of the foregoing conditions (1), (2), (3), or (4) are met, and one or more of the foregoing conditions (5), (6), or (7) are met, the terminal device may send the SCG failure to the NR base station, to trigger the network to release EN-DC, and suppress reporting of the B1 or B2 event of the NR neighboring cell.

It should be understood that, the terminal device sends the SCG failure to the NR base station and suppresses reporting of the B1/B2 event of the NR neighboring cell, so that the NR base station releases EN-DC (or the NR base station deletes the NR cell), and the terminal device transmits the data of the first application through the link with the LTE base station. This helps reduce RTT, and improves user experience. Then, the network device may further continue to add another NR cell for the terminal device. After the another NR cell is added, the terminal device may further transmit the data of the first application program over the NR base station. When the network device adds another NR cell is determined by the network device.

In this embodiment of this application, the terminal device may further send tracking area update (tracking area update, TAU) information, detach (detach) information, or attach (attach) information to the NR base station, so that the network device deletes the NR cell. For example, the terminal device may use capability information of the terminal device in the TAU information to carry information indicating that the terminal device does not support EN-DC capability, so that the NR base station deletes the NR cell. Then, the terminal device may transmit the data of the first application program through the link with the LTE base station. When the terminal device determines that the delay in transmitting the data of the first application program through the link with the LTE base station is large, and expects to restore the link with the NR base station, the terminal device needs to send capability information of the terminal device to the NR base station again. The capability information may carry information indicating that the terminal device supports the EN-DC capability.

S806. If the terminal device is currently not in the scenario of EN-DC, and the terminal device has suppressed reporting of the B1 or B2 event of the NR neighboring cell, the terminal device cancels suppression, and starts the ping-pong handover suppression timer T2.

In the method 800 in this embodiment of this application, if the terminal device is not currently in the scenario of EN-DC, the terminal device establishes a link with the LTE base station. If the terminal device determines that a delay in transmitting the data of the first application program through the link with the LTE base station is greater than or equal to the preset delay threshold, the terminal device may cancel the suppression. In this case, the network device may continue to add an NR cell for the terminal device, so that the terminal device can establish a link with the NR base station and transmit the data of the first application program through the link. This helps reduce the RTT, and improves user experience.

S807. If the terminal device determines that the delay of the first application program is less than the preset delay threshold in S803, and the terminal device has suppressed reporting of the B1 or B2 event of the NR neighboring cell, the terminal device cancels suppression, and allows reporting of the B1 or B2 event of the NR neighboring cell.

In an embodiment, in addition to the conditions for canceling suppression in the foregoing method 800, the terminal device may cancel suppression in a scenario such as a cell change or a timing advance (timing advance, TA) change.

In this embodiment of this application, in the scenario of EN-DC, when a signal of the NR cell is poor, a signal of the LTE serving cell is good, and downlink data is transmitted through NR, in the method 800, the SCG failure may be reported to trigger the network to delete the EN-DC, and the downlink data is received over the LTE cell with a good signal. This can reduce the RTT and improve user experience.

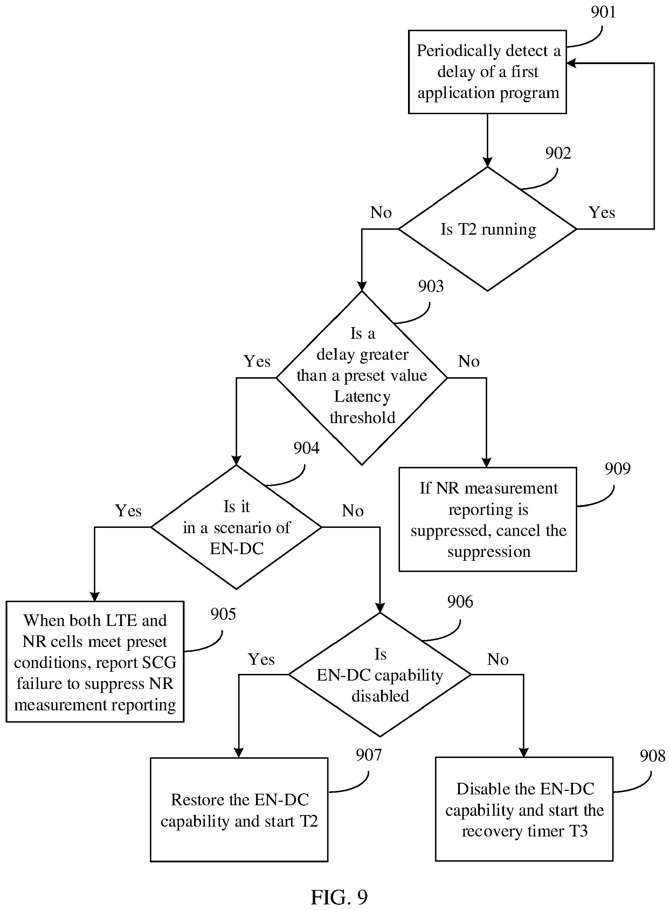

FIG. 9 is a schematic flowchart of a method 900 for adjusting a data transmission path according to an embodiment of this application. The method 900 may be performed by a terminal device, and the method 900 includes the following steps.

S901. The terminal device periodically detects a delay of a first application program.

S902. The terminal device determines whether a ping-pong handover suppression timer T2 is running, where when the ping-pong handover suppression timer T2 is running, the terminal device receives downlink data of the first application program over an NR base station, or the terminal device sends uplink data of the first application program to the NR base station.

If the ping-pong handover suppression timer T2 is running, the terminal device returns to S801 to continue to detect the delay of the first application program.

S903. If the ping-pong handover suppression timer T2 is not running, the terminal device determines whether the delay of the first application program is greater than or equal to a preset delay threshold.

S904. If the terminal device determines that the delay of the first application program is greater than the preset delay threshold, the terminal device continues to determine whether the terminal device is currently in a scenario of EN-DC.

S905. If the terminal device is currently in the scenario of EN-DC, the terminal device continues to detect signal strength of a cell served by the NR base station and signal strength of a cell served by an LTE base station. If the signal strength of the cell served by the NR base station is less than or equal to a first preset value and the signal strength of the cell served by the LTE base station is greater than or equal to a second preset threshold, the terminal device sends an SCG failure to the NR base station, to trigger a network to release EN-DC, and suppress reporting of a B1 or B2 event of an NR neighboring cell, where the suppression event is T1.

It should be understood that for S901 to S906, refer to the foregoing processes of S801 to S806. For brevity, details are not described herein again.

S906. If the terminal device is not currently in the scenario of EN-DC, the terminal device continues to determine whether an EN-DC capability is disabled.

Compared with the foregoing method 800, in the method 900, when the terminal device determines that the terminal device is not in the scenario of EN-DC (in this case, the terminal device has only a link with the LTE base station), the terminal device may continue to determine whether the EN-DC capability is disabled.

S907. If the EN-DC capability is disabled by the terminal device, the terminal device may restore the EN-DC capability, and start a ping-pong handover suppression timer T2.

If the EN-DC capability is disabled by the terminal device, the terminal device may restore the EN-DC capability. In this way, after the EN-DC capability is restored, the terminal device may continue to transmit the data of the first application program through a link between the terminal device and the NR base station. This reduces RTT, and improves user experience.

It should be understood that, in this embodiment of this application, a function of the ping-pong handover suppression timer T2 is to prevent frequent suppression and suppression release of EN-DC.

S908. If the EN-DC capability is not disabled by the terminal device, the terminal device disables the EN-DC capability, and starts a recovery timer T3.

If the EN-DC capability is not disabled by the terminal device, in this case, although the terminal device transmits the data of the first application only through the link with the LTE base station, the LTE base station actually transmits the data through an NR module of the LTE base station in a transmission process. Due to a compatibility problem, the delay of the data of the first application program is relatively large. If the terminal device disables the EN-DC capability, the LTE base station performs data transmission through an LTE module of the LTE base station. Because of good compatibility, the delay of the data of the first application program can be reduced. This can reduce the RTT and improve user experience.

In this embodiment of this application, a function of the T3 timer is to release suppression. If another suppression release condition is not met, the terminal device may release suppression after the timer is timeout.

S909. If the terminal device determines that the delay of the first application program is less than the preset delay threshold in S903,
if the terminal device does not disable the EN-DC capability, that is, if only reporting of the B 1 or B2 event is suppressed, the terminal device cancels suppression, and allows reporting of the B1 or B2 event of the neighboring cell;
if the EN-DC capability is disabled by the terminal device, the terminal device restores the EN-DC capability; or
the terminal device may also enable a ping-pong handover suppression timer T2.

Restoring or disabling the EN-DC capability of the terminal device is described in the method 800 and the method 900. The following describes in detail manners of restoring or disabling the EN-DC capability of the terminal device.

A manner in which the terminal device disables the EN-DC capability includes but is not limited to the following manners:
Manner 1
   The terminal device may trigger, by proactively reporting SCG failure, a network device to delete an NR cell.
Manner 2
   The terminal device in an idle (idle) state triggers a tracking area update (tracking area update, TAU), and carries an information element (information element, IE) of "UE radio capability information update needed" to indicate the network device to re-query a capability of the terminal device. When reporting a capability, the terminal device notifies the network device that EN-DC is not supported. In an embodiment, in a connected state, the terminal device may first release the link to return to the idle state, and then trigger the TAU.
Manner 3
   The terminal device sends a detach (detach) message to the network device, and then initiates an attach (attach) process. When the network device queries a capability of the terminal device, the terminal device notifies the network device that EN-DC is not supported.

A manner in which the terminal device enables or restores the EN-DC capability includes but is not limited to the following manners:
Manner 1
   If the terminal device previously releases EN-DC by reporting the SCG failure, the terminal device can only cancel local suppression. When the network device adds an NR cell is determined by implementation of the network device.
Manner 2
   If the EN-DC capability is disabled by using the TAU, the terminal device triggers the network to re-query the UE capability in the same way. When reporting the UE capability, the terminal device notifies the network that EN-DC is supported.
Manner 3
   If the EN-DC capability is disabled by using the detach/attach method, this method is still used to report that EN-DC is supported.

In this embodiment of this application, in the scenario of EN-DC, when a signal of the NR cell is poor, a signal of the LTE serving cell is good, and downlink data is transmitted through NR, in the method 800, the SCG failure may be reported to trigger the network to delete the EN-DC, and the downlink data is received over the LTE cell with a good signal. This can reduce the RTT and improve user experience.

In a scenario of non-EN-DC, the TAU/detach/attach related procedures are performed to disable and enable the EN-DC capability, to reduce the RTT.

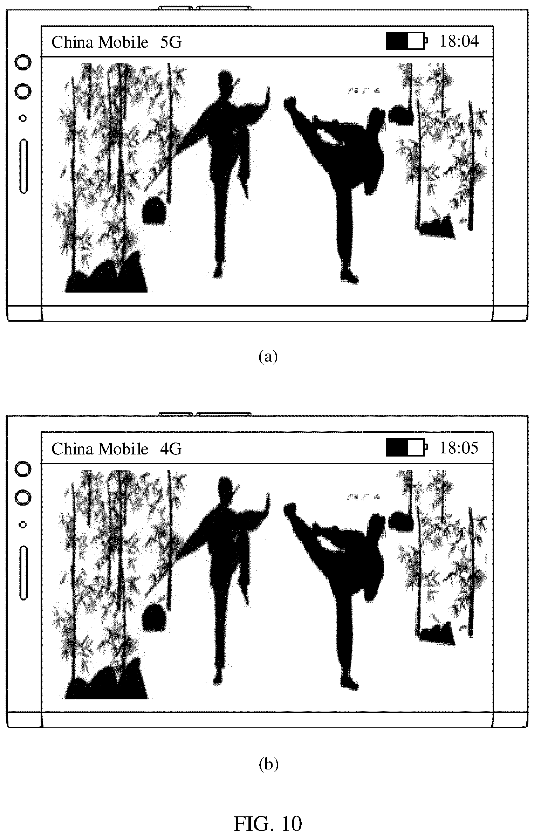

FIG. 10 is a schematic diagram of an application scenario according to an embodiment of this application.

As shown in (a) in FIG. 10, a user is playing a game on a mobile phone. In this case, a network standard displayed on the mobile phone is "5G", and the mobile phone is in the scenario of EN-DC. In other words, the mobile phone is transmitting data packets of the game application to the NR base station. A path between the mobile phone and the NR base station may be a primary path. An application processor of the mobile phone determines that the currently running game application is in a list of applications for which the mobile phone can perform the foregoing method. The application processor of the mobile phone may indicate a baseband chip that a delay of the application needs to be detected.

At a specific moment, when the baseband chip of the mobile phone detects that the delay of the game application is greater than or equal to a preset delay threshold, the baseband chip of the mobile phone may generate first indication information. The first indication information may be used to indicate to disconnect a link between the mobile phone and the NR base station. The baseband chip of the mobile phone sends the first indication information to a radio frequency chip, and the radio frequency chip sends the first indication information to the NR base station. After receiving the first indication information, the NR base station may disconnect the path from the mobile phone. The mobile phone in the scenario of EN-DC may send a data packet of the game application to the terminal device over the LTE base station, or the mobile phone may send a data packet of the game application through a path between the mobile phone and the LTE base station. In this case, the network standard displayed on the mobile phone is 4G.

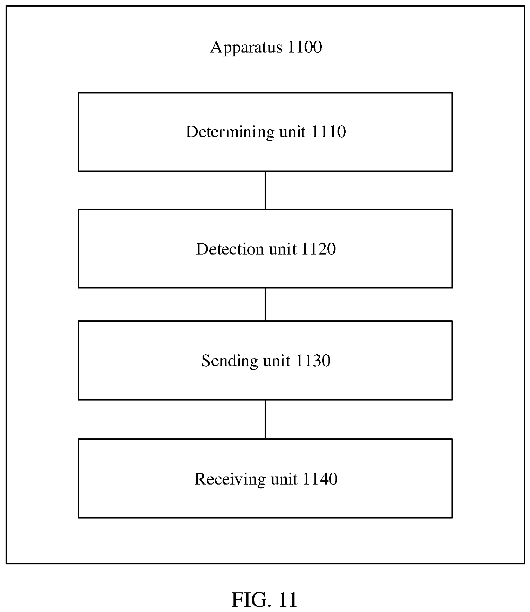

The foregoing describes in detail the method for adjusting a data transmission path in embodiments of this application with reference to FIG. 1 to FIG. 9. The following describes in detail an apparatus and a communications system for adjusting a data transmission path in embodiments of this application with reference to FIG. 11 to FIG. 12. The technical features described in the method embodiments are also applicable to the following apparatus embodiments.

FIG. 11 is a schematic block diagram of an apparatus 1100 for adjusting a data transmission path according to an embodiment of this application. As shown in FIG. 11, a first link is established between the apparatus and an NR base station, and the terminal device transmits data of a first application with the NR base station through the first link, a second link is established between the apparatus and an LTE base station, and the apparatus includes:
a determining unit 1110, configured to determine the first application;
a detection unit 1120, configured to detect a delay of the data of the first application;
a sending unit 1130, configured to: when the delay is greater than or equal to a first preset delay threshold, send first indication information to the NR base station, where the first indication information is used to indicate the NR base station to disconnect the first link from the apparatus; and
a receiving unit 1140, configured to receive data of the first application from the LTE base station through the second link, or the sending unit 1130 is further configured to send the data of the first application to the LTE base station through the second link.

Optionally, the sending unit 1130 is specifically configured to: send secondary cell group failure information SCG failure to the NR base station, and suppress reporting of a B1 or B2 event.

Optionally, the receiving unit 1140 is further configured to: before suppressing reporting of the B1 or B2 event, receive a measurement gap sent by the NR base station, where the measurement gap is used by the terminal device to measure a neighboring cell; and the terminal device ignores the measurement gap.

Optionally, the receiving unit 1140 is further configured to: before suppressing reporting of the B1 or B2 event, receive a measurement gap sent by the NR base station, where the measurement gap is used by the terminal device to measure a neighboring cell; and
the determining unit 1110 is further configured to: determine a measurement result based on the measurement gap; and determine that the measurement result meets reporting of the B1 or B2 event.

Optionally, the sending unit 1130 is specifically configured to:
send tracking area update TAU information to the NR base station, where the TAU information includes capability information of the apparatus, and the capability information of the apparatus is used to indicate that the terminal device does not support LTE-NR dual connectivity.

Optionally, the sending unit 1130 is further configured to:
before sending the first indication information to the NR base station, send attach attach information or detach detach information to the NR base station;
the receiving unit 1140 is further configured to receive a capability query request from the NR base station; and
the sending unit 1130 is specifically configured to send the capability information of the apparatus to the NR base station based on the capability query request, where the capability information of the apparatus is used to indicate that the terminal device does not support LTE-NR dual connectivity.

Optionally, the determining unit 1110 is further configured to:
before sending the first indication information to the NR base station, determine that a signal strength of a cell served by the NR base station is less than or equal to a first preset signal strength threshold, or determine that signal quality of the cell served by the NR base station is less than or equal to a second preset signal quality threshold; and/or
determine that a signal strength of a cell served by the LTE base station is greater than or equal to a third preset signal strength threshold or signal quality of the cell served by the LTE base station is greater than or equal to a fourth preset signal quality threshold.

Optionally, the detection unit 1120 is further configured to detect a delay in transmitting the data of the first application through the second link;
the sending unit 1130 is further configured to: when the delay of the first application is greater than or equal to the first preset delay threshold, send second indication information to the LTE base station, where the second indication information is used to indicate the LTE base station to disconnect the second link from the terminal device;
a link establishment unit is configured to re-establish the first link with the NR base station; and
the receiving unit 1140 is further configured to receive data of the first application from the NR base station through the first link, or the sending unit 1130 is further configured to send the data of the first application to the NR base station through the first link.

Optionally, the detection unit 1120 is further configured to detect a delay of data of the second application; and
the sending unit 1130 is further configured to: when the delay is greater than or equal to a second preset delay threshold, continue to send the data of the second application to the NR base station through the first link; or the receiving unit 1140 continues to receive the data of the second application from the NR base station through the first link.

Specifically, the apparatus 1100 may correspond to the terminal device in the methods 600 to 900 for adjusting a data transmission path in embodiments of this application. The apparatus 1100 may include modules (or units) configured to perform the methods performed by the terminal device in the methods 600 to 900. In addition, the modules (or units) in the apparatus 1100 and the foregoing other operations and/or functions are respectively used to implement corresponding processes in the method 600 to the method 900. A specific process of performing the corresponding step by each module (or unit) has been described in detail in the methods 600 to 900.

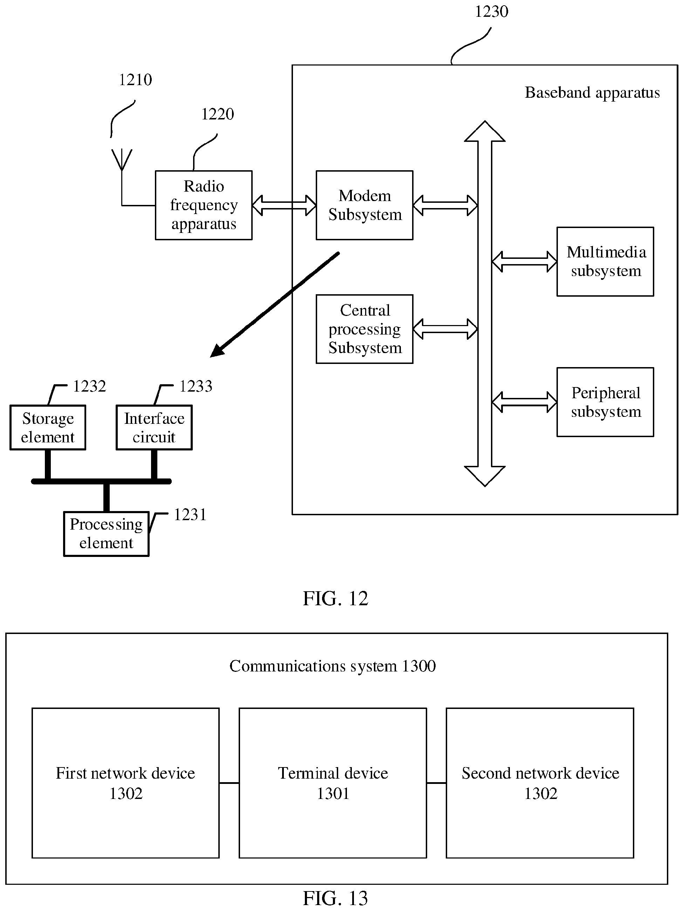

FIG. 12 is a schematic diagram of a structure of a terminal device according to an embodiment of this application. The terminal device may be the terminal device in the foregoing embodiment, and is configured to implement operations of the terminal device in the foregoing embodiments. As shown in FIG. 12, the terminal device includes an antenna 1210, a radio frequency part 1220, and a signal processing part 1230. The antenna 1210 is connected to the radio frequency part 1220. In a downlink direction, the radio frequency part 1220 receives, through the antenna 1210, information sent by a network device, and sends, to the signal processing part 1230 for processing, the information sent by the network device. In an uplink direction, the signal processing part 1230 processes information of the terminal device, and sends the information to the radio frequency part 1220. The radio frequency part 1220 processes the information of the terminal device, and then sends the processed information to the network device through the antenna 1210.

The signal processing part 1230 may include a modem subsystem, configured to process data at each communications protocol layer. The signal processing part 1230 may further include a central processing subsystem, configured to implement processing of an operating system and an application layer of the terminal device. In addition, the signal processing part 1230 may further include another subsystem, for example, a multimedia subsystem or a peripheral subsystem. The multimedia subsystem is configured to control a camera, a screen display, or the like of the terminal device, and the peripheral subsystem is configured to implement a connection to another device. The modem subsystem may be a chip that is separately disposed. Optionally, the foregoing apparatus used for the terminal device may be located in the modem subsystem.

The modem subsystem may include one or more processing elements 1231, for example, include a main control CPU and another integrated circuit. In addition, the modem subsystem may further include a storage element 1232 and an interface circuit 1233. The storage element 1232 is configured to store data and a program. However, a program used to perform the method performed by the terminal device in the foregoing methods may not be stored in the storage element 1232, but is stored in a memory outside the modem subsystem, and is loaded and used by the modem subsystem when to be used. The interface circuit 1233 is configured to communicate with another subsystem. The foregoing apparatus used in the terminal device may be located in the modem subsystem, and the modem subsystem may be implemented by using a chip. The chip includes at least one processing element and an interface circuit. The processing element is configured to perform the steps of any one of the methods performed by the terminal device. The interface circuit is configured to communicate with another apparatus. In an implementation, units in the terminal device for implementing the steps in the foregoing methods may be implemented by scheduling a program by a processing element. For example, the apparatus used in the terminal device includes a processing element and a storage element. The processing element invokes a program stored in the storage element, to perform the methods performed by the terminal device in the foregoing method embodiments. The storage element may be a storage element located on a same chip as the processing element, that is, an on-chip storage element.

In another implementation, a program used to perform the method performed by the terminal device in the foregoing methods may be stored in a storage element located on a different chip from the processing element, that is, an off-chip storage element. In this case, the processing element invokes or loads the program from the off-chip storage element to an on-chip storage element, to invoke and perform any method performed by the terminal device in the foregoing method embodiments.

In still another implementation, units of the terminal device for implementing the steps of the foregoing methods may be configured as one or more processing elements. These processing elements are disposed on the modem subsystem. The processing element herein may be an integrated circuit, for example, one or more applicationspecific integrated circuits (application specific integrated circuit, ASIC), one or more digital signal processors (digital signal processor, DSP), one or more field programmable gate arrays (field programmable gate array, FPGA), or a combination of these types of integrated circuits. These integrated circuits may be integrated together to form a chip.

Units of the terminal device for implementing the steps in the foregoing methods may be integrated together in a form of an SOC. The SOC chip is configured to implement the foregoing methods. At least one processing element and storage element may be integrated into the chip, and the processing element invokes a program stored in the storage element to implement the foregoing methods performed by the terminal device. Alternatively, at least one integrated circuit may be integrated into the chip, to implement the foregoing methods performed by the terminal device. Alternatively, the foregoing implementations may be combined. To be specific, functions of some units may be implemented by invoking a program by the processing element, and functions of some units may be implemented by the integrated circuit.

It can be learned that the foregoing apparatus used for the terminal device may include at least one processing element and interface circuit. The at least one processing element is configured to perform any method performed by the terminal device provided in the foregoing method embodiments. The processing element may use a first manner: invoke the program stored in the storage element, to perform some or all steps performed by the terminal device. The processing element may alternatively use a second manner: use a hardware integrated logic circuit in the processor element in combination with instructions, to perform some or all steps performed by the terminal device. Certainly, the processing element may alternatively use a combination of the first manner and the second manner, to perform some or all steps performed by the terminal device.

FIG. 13 shows a schematic block diagram of a communications system 1300 according to an embodiment of this application. As shown in FIG. 13, the communications system 1300 includes a terminal device 1301, a first network device 1302, and a second network device 1303. The terminal device 1301 may be the terminal device in the foregoing embodiment, or may be the apparatus 1100 in the foregoing embodiment. The first network device 1302 may be an NR base station, and the second network device 1303 may be an LTE base station.

According to the method provided in embodiments of this application, this application further provides a computer program product. The computer program product includes computer program code. When the computer program code is run on a computer, the computer is enabled to perform the method in the foregoing embodiments.

According to the method provided in embodiments of this application, this application further provides a computer-readable medium. The computer-readable medium stores program code. When the program code is run on a computer, the computer is enabled to perform the method in the foregoing embodiments.

The terminal device and the network device in the foregoing apparatus embodiments may exactly correspond to the terminal device or the network device in the method embodiments, and a corresponding module or unit performs a corresponding step. For example, when the apparatus is implemented in a form of a chip, the receiving unit may be an interface circuit that is of the chip and that is configured to receive a signal from another chip or apparatus. The foregoing sending unit is an interface circuit of the apparatus, and is configured to send a signal to another apparatus. For example, when the apparatus is implemented by a chip, the sending unit is an interface circuit that is of the chip and that is configured to send a signal to another chip or apparatus.

An embodiment of this application further provides a communications system. The communications system includes the foregoing terminal device and/or the foregoing network device.

A person of ordinary skill in the art may be aware that, units and algorithm steps in examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or some of the steps of the methods described in embodiments of this application. The foregoing storage medium includes: any medium that can store program code, such as a USB flash drive, a removable hard disk drive, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for adjusting a data transmission path, wherein the method is applied to a terminal device, a first link is established between the terminal device and an NR base station, the terminal device transmits data of a first application to the NR base station through the first link, a second link is established between the terminal device and an LTE base station, and the method comprises:
detecting, by the terminal device, a delay of the data of the first application;
when the terminal device determines that the delay is greater than or equal to a first preset delay threshold, sending, by the terminal device, first indication information to the NR base station, wherein the first indication information is used to indicate the NR base station to disconnect the first link from the terminal device; and
receiving, by the terminal device, the data of the first application from the LTE base station through the second link, or sending, by the terminal device, the data of the first application to the LTE base station through the second link.

2. The method according to claim 1, wherein the sending, by the terminal device, first indication information to the NR base station comprises:
sending, by the terminal device, secondary cell group failure information SCG failure to the NR base station, and suppressing reporting of a B1 or B2 event.

3. The method according to claim 1 or 2, wherein before the terminal device suppresses the reporting of the B1 or B2 event, the method further comprises:
receiving, by the terminal device, a measurement gap sent by the NR base station, wherein the measurement gap is used by the terminal device to measure a neighboring cell; and
ignoring, by the terminal device, the measurement gap.

4. The method according to claim 1 or 2, wherein before the terminal device suppresses the reporting of the B1 or B2 event, the method further comprises:
receiving, by the terminal device, a measurement gap sent by the NR base station, wherein the measurement gap is used by the terminal device to measure a neighboring cell;
determining, by the terminal device, a measurement result based on the measurement gap; and
determining, by the terminal device, that the measurement result meets reporting of the B1 or B2 event.

5. The method according to claim 1, wherein the sending, by the terminal device, first indication information to the NR base station comprises:
sending, by the terminal device, tracking area update TAU information to the NR base station, wherein the TAU information comprises capability information of the terminal device, and the capability information of the terminal device is used to indicate that the terminal device does not support LTE-NR dual connectivity.

6. The method according to claim 1, wherein before the sending, by the terminal device, first indication information to the NR base station, the method further comprises:
sending, by the terminal device, attach attach information or detach detach information to the NR base station; and
receiving, by the terminal device, a capability query request from the NR base station, wherein
the sending, by the terminal device, first indication information to the NR base station comprises:
sending, by the terminal device, capability information of the terminal device to the NR base station based on the capability query request, wherein the capability information of the terminal device is used to indicate that the terminal device does not support LTE-NR dual connectivity.

7. The method according to any one of claims 1 to 6, wherein before the sending, by the terminal device, first indication information to the NR base station, the method further comprises:
determining, by the terminal device, that a signal strength of a cell served by the NR base station is less than or equal to a first preset signal strength threshold or signal quality of the cell served by the NR base station is less than or equal to a second preset signal quality threshold; and/or
determining, by the terminal device, that a signal strength of a cell served by the LTE base station is greater than or equal to a third preset signal strength threshold or signal quality of the cell served by the LTE base station is greater than or equal to a fourth preset signal quality threshold.

8. The method according to any one of claims 1 to 7, wherein the method further comprises:
detecting, by the terminal device, a delay in transmitting the data of the first application through the second link;
when the terminal device determines that the delay in transmitting the data of the first application is greater than or equal to the first preset delay threshold, sending, by the terminal device, second indication information to the LTE base station, wherein the second indication information is used to indicate the LTE base station to disconnect the second link from the terminal device;
re-establishing, by the terminal device, the first link with the NR base station; and
receiving, by the terminal device, the data of the first application from the NR base station through the first link, or sending, by the terminal device, the data of the first application to the NR base station through the first link.

9. The method according to any one of claims 1 to 8, wherein the terminal device further transmits data of a second application through the first link, and the method further comprises:
detecting, by the terminal device, a delay of the data of the second application; and
when the terminal device determines that the delay is greater than or equal to a second preset delay threshold, continuing, by the terminal device, transmitting the data of the second application through the first link.

10. A terminal device, wherein a first link is established between the terminal device and an NR base station, the terminal device transmits data of a first application to the NR base station through the first link, a second link is established between the terminal device and an LTE base station, and the terminal device comprises:
a processor, configured to detect a delay of the data of the first application; and
a transceiver, configured to: when the processor determines that the delay is greater than or equal to a first preset delay threshold, send first indication information to the NR base station, wherein the first indication information is used to indicate the NR base station to disconnect the first link from the terminal device, wherein
the transceiver is further configured to receive the data of the first application from the LTE base station through the second link, or send the data of the first application to the LTE base station through the second link.

11. The terminal device according to claim 10, wherein the transceiver is specifically configured to:
send secondary cell group failure information SCG failure to the NR base station, and suppress reporting of a B1 or B2 event.

12. The terminal device according to claim 11, wherein the transceiver is further configured to:
before suppressing reporting of the B1 or B2 event, receive a measurement gap sent by the NR base station, wherein the measurement gap is used by the terminal device to measure a neighboring cell; and
ignore the measurement gap.

13. The terminal device according to claim 11, wherein the transceiver is further configured to:
before suppressing reporting of the B1 or B2 event, receive a measurement gap sent by the NR base station, wherein the measurement gap is used by the terminal device to measure a neighboring cell;
the processor is further configured to determine a measurement result based on the measurement gap; and
the processor is further configured to determine that the measurement result meets reporting of the B1 or B2 event.

14. The terminal device according to claim 10, wherein the transceiver is specifically configured to:
send tracking area update TAU information to the NR base station, wherein the TAU information comprises capability information of the terminal device, and the capability information of the terminal device is used to indicate that the terminal device does not support LTE-NR dual connectivity.

15. The terminal device according to claim 10, wherein the transceiver is specifically configured to:
send attach attach information or detach detach information to the NR base station;
receive a capability query request from the NR base station; and
send capability information of the terminal device to the NR base station, wherein the capability information of the terminal device is used to indicate that the terminal device does not support LTE-NR dual connectivity.

16. The terminal device according to any one of claims 10 to 15, wherein the processor is specifically configured to:
before sending the first indication information to the NR base station, determine that a signal strength of a cell served by the NR base station is less than or equal to a first preset signal strength threshold or signal quality of the cell served by the NR base station is less than or equal to a second preset signal quality threshold; and/or
determine that a signal strength of a cell served by the LTE base station is greater than or equal to a third preset signal strength threshold or signal quality of the cell served by the LTE base station is greater than or equal to a fourth preset signal quality threshold.

17. The terminal device according to any one of claims 10 to 16, wherein the processor is further configured to:
detect a delay in transmitting the data of the first application through the second link;
the transceiver is further configured to: when it is determined that the delay in transmitting the data of the first application is greater than or equal to the first preset delay threshold, send second indication information to the LTE base station, wherein the second indication information is used to indicate the LTE base station to disconnect the second link from the terminal device;
the processor is further configured to re-establish the first link with the NR base station; and
the transceiver is further configured to receive the data of the first application from the NR base station through the first link, or send the data of the first application to the NR base station through the first link.

18. The terminal device according to any one of claims 10 to 17, wherein the terminal device further transmits the data of the second application through the first link;
the processor is further configured to detect a delay of data of a second application; and
the transceiver is further configured to, when the processor determines that the delay is greater than or equal to a second preset delay threshold, continue transmitting the data of the second application through the first link.

19. A chip system, wherein the chip system is located in a terminal device, a first link is established between the terminal device and an NR base station, the terminal device transmits data of a first application to the NR base station through the first link, and a second link is established between the terminal device and an LTE base station;
when determining that a delay is greater than or equal to a first preset delay threshold, the chip system sends first indication information to the NR base station, wherein the first indication information is used to indicate the NR base station to disconnect the first link from the terminal device; and
the chip system is further configured to receive the data of the first application from the LTE base station through the second link, or send the data of the first application to the LTE base station through the second link.

20. The chip system according to claim 19, wherein the chip system is specifically configured to:
send secondary cell group failure information SCG failure to the NR base station, and suppress reporting of a B1 or B2 event.

21. The chip system according to claim 20, wherein the chip system is further configured to:
before suppressing reporting of the B1 or B2 event, receive a measurement gap sent by the NR base station, wherein the measurement gap is used by the terminal device to measure a neighboring cell; and
ignore the measurement gap.

22. The chip system according to claim 20, wherein the chip system is further configured to:
before suppressing reporting of the B1 or B2 event, receive a measurement gap sent by the NR base station, wherein the measurement gap is used by the terminal device to measure a neighboring cell;
determine a measurement result based on the measurement gap; and
determine that the measurement result meets reporting of the B1 or B2 event.

23. The chip system according to claim 19, wherein the chip system is specifically configured to:
send tracking area update TAU information to the NR base station, wherein the TAU information comprises capability information of the terminal device, wherein the capability information of the terminal device is used to indicate that the terminal device does not support LTE-NR dual connectivity.

24. The chip system according to claim 19, wherein the chip system is specifically configured to:
send attach attach information or detach detach information to the NR base station;
receive a capability query request from the NR base station; and
send capability information of the terminal device to the NR base station, wherein the capability information of the terminal device is used to indicate that the terminal device does not support LTE-NR dual connectivity.

25. The chip system according to any one of claims 19 to 24, wherein the chip system is further configured to:
before sending the first indication information to the NR base station, determine that a signal strength of a cell served by the NR base station is less than or equal to a first preset signal strength threshold or signal quality of the cell served by the NR base station is less than or equal to a second preset signal quality threshold; and/or
determine that a signal strength of a cell served by the LTE base station is greater than or equal to a third preset signal strength threshold or signal quality of the cell served by the LTE base station is greater than or equal to a fourth preset signal quality threshold.

26. The chip system according to any one of claims 19 to 25, wherein the chip system is further configured to:
detect a delay in transmitting the data of the first application through the second link;
when determining that the delay in transmitting the data of the first application is greater than or equal to the first preset delay threshold, send second indication information to the LTE base station, wherein the second indication information is used to indicate the LTE base station to disconnect the second link from the terminal device;
re-establish the first link with the NR base station; and
receive the data of the first application from the NR base station through the first link, or send the data of the first application to the NR base station through the first link.

27. The chip system according to any one of claims 19 to 26, wherein the terminal device further transmits the data of the second application through the first link; and
the chip system is further configured to detect a delay of data of a second application; and
when the chip system determines that the delay is greater than or equal to a second preset delay threshold, continue transmitting the data of the second application through the first link.
